(19) Europäisches Patentamt
European Patent Office
Office européen des brevets

(11) **EP 3 783 520 A1**

(12) **EUROPEAN PATENT APPLICATION**

(43) Date of publication:
**24.02.2021  Bulletin 2021/08**

(51) Int Cl.:
**G06F 30/20** (2020.01)    **G06F 30/27** (2020.01)
G06F 113/10 (2020.01)    G06F 119/18 (2020.01)

(21) Application number: **19192934.8**

(22) Date of filing: **21.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **DENTSPLY SIRONA Inc.**
**York, PA 17401 (US)**

• **Sirona Dental Systems GmbH**
**64625 Bensheim (DE)**

(72) Inventors:
• **Stahl, Christian, Dr.**
**64625 Bensheim (DE)**
• **Weiß, Daniel, Dr.**
**64625 Bensheim (DE)**

(74) Representative: **Özer, Alpdeniz et al**
**Dentsply Sirona**
**Legal IP Department**
**Fabrikstraße 31**
**64625 Bensheim (DE)**

(54) **METHOD OF DETERMINING THE ORIENTATION OF A THREE-DIMENSIONAL MODEL FOR ADDITIVE MANUFACTURING**

(57) The present invention relates to a method of determining the orientation of a 3D Model (1) to be generated by an additive manufacturing apparatus comprising: a vat for holding a photocurable material; and a platform for holding the 3D object corresponding to the 3D model (1), wherein the platform is relatively movable with respect to the vat, the method comprising: a step of defining the surface geometry of the 3D model (1), wherein the surface geometry includes a plurality of surface segments; characterized by further comprising: a step of defining an evaluation function R which depends on the surface segments and associated weighing factors $f$ which indicate a degree of sensitivity of the surface segments respectively against post-processing for removal of any support structure; a step of assigning one or more weighing factors $f$ to the surface segments respectively; a step of determining the orientation of the 3D model (1) relative to the platform based on the evaluation function R with the assigned weighing factors $f$.

FIG. 1

## Description

## TECHNICAL FIELD OF THE INVENTION

The present invention relates to a method of additive manufacturing of a three-dimensional object. The present invention more specifically relates to a method of determining the orientation of a 3D Model to be generated through additive manufacturing.

## BACKGROUND ART OF THE INVENTION

In additive manufacturing, a 3D object is printed layer-by-layer through light-based curing of a liquid printing medium i.e., a liquid photocurable resin, which is selectively cured under the influence of UV radiation. In a commonly known variation of additive manufacturing, the 3D objects are preferably pulled by means of a platform, upside-down out of the liquid photocurable material filled in a vat. Other variations of additive manufacturing are also known to those skilled in the art.

During the 3D printing, enough support structures must be attached to the 3D object. The locations on the surface of the 3D object where the support structures must be attached depend on the geometry of the 3D object to be 3D printed and the orientation of the 3D object with respect to the platform.

It is generally known in the art which points of a given geometry require support structures for a given orientation of the 3D object. For instance, US 2015/0151492 A1 discloses a method of generating support structures for a 3D object to be additively manufactured.

After the 3D printing, the cleaning, the thermal and/or photochemical curing of the 3D object, the support structures must be removed mechanically. The removal process is time-consuming and potentially leads to a change in the geometry of the 3D object e.g. when finishing with a rotary tool. For dental components such as dental restorations, drilling templates, dental models, and the like with high quality requirements on shape accuracy, the consequences of mechanical post-processing can become critical.

## DISCLOSURE OF THE INVENTION

An objective of the present invention is to overcome the disadvantages of the prior art and provide a method of determining the orientation of a 3D Model to be generated by an additive manufacturing apparatus with consideration of quality requirements of the resulting 3D object.

This objective has been achieved through the method as defined in claim 1. The dependent claims relate to further developments.

The present invention provides a method of determining the orientation of a 3D Model to be generated by an additive manufacturing apparatus comprising: a vat for holding photocurable material; and a platform for holding the 3D object corresponding to the 3D model, wherein the platform is relatively movable with respect to the vat. The method comprises: a step of defining the surface geometry of the 3D model, wherein the surface geometry includes a plurality of surface segments; a step of defining an evaluation function $R$ which depends on the surface segments and associated weighing factors $f$ which indicate a degree of sensitivity of the surface segments respectively against post-processing for removal of any support structure; a step of assigning one or more weighing factors $f$ to the surface segments respectively; and a step of determining the orientation of the 3D model (1) relative to the platform based on the evaluation function R with the assigned weighing factors $f$.

A major advantageous effect of the present invention is that through the determination of the orientation of the 3D model to be printed, the locations where support structures must be attached to the 3D model can be influenced. More specifically, through the determination of the orientation with the evaluation function R based on the weighing factors $f$ which indicate a degree of sensitivity of the surface segments respectively against post-processing for removal of any support structure, the support structures can be avoided or reduced in sensitive surface segments of the 3D model, and thus located to other areas. Thereby possible surface artefacts due to mechanical post-processing can be avoided or reduced, and the need for investing manual extra work for a precise removal of the support structures can be obviated or reduced as much as possible. Hence the user can be refrained from accepting impairments of the manually reworked surfaces. Another major advantageous effect of the present invention is that through the assignment of the weighing functions $f$, the post-processing for removal of any support structure can be also influenced. In the case of dental components, surface segments of the 3D model to be printed where less sensitivity is required than in other parts, or surface segments where support structures can be removed more easily and/or quickly than in other parts, or surface segments where less damage is to be expected from manual post-processing than in other parts can be easily identified and considered in the assignment of the weighing factors $f$. Another major advantageous effect of the present invention is that the method steps provide, thanks to the evaluation function $R$ based on the weighing factors $f$, an automatic algorithm for the avoidance of the attachment of support structures at such locations which, compared to other locations of the 3D model to be printed, have an increased need for protection against mechanical post-processing. Thereby, the user is freed from manually orientating of the 3D object and/or placement of the support structures. Manual manipulation of the placement of the support structures requires the experience of the user, and is only possible to a limited extent, and thus can increase the risk of misprints. Another major advantageous effect of the present invention is that the risk of misprints can be avoided.

According to the present invention, the orientation of the 3D model to be printed is optionally further determined through optimizing the evaluation function $R$. Thus, at the optimal orientation of the 3D model, the evaluation functions must have an extremum, preferably a minimum depending on the set overall algebraic sign of the evaluation function $R$ and the weighing factors $f$. Thereby, the present invention provides a precise algorithmic solution to find the optimal orientation which is superior to any manual orientation of the 3D model by a user.

According to the present invention, when the surface segments with the higher degree of sensitivity are arranged to be directed away from the building platform, then the support structure to be located onto such surface segments can be avoided or reduced as much as possible. Such principle can be embodied through several different evaluation functions $R$ which can be used to determine the orientation, or even the optimal orientation of the 3D model. In an embodiment, the surface segments weighed with the weighing factors $f$ are projected onto a plane parallel to the building platform to obtain the evaluation function $R$. The evaluation function $R$ is preferably normalized with the total surface area and has a negative overall sign. The weighing factor $f$ is preferably larger than 1 for surface segments which are considered as being sensitive against post-processing for removal of any support structure, and for all other surface segments $f$ is equal to 1. In an alternative embodiment, the evaluation function $R$ may be constructed by calculating the moment of inertia of the 3D model by treating the 3D model as a massive object suspended from the building platform where the weight of the sensitive surface segments are augmented by the weighing factors $f$. Hence those skilled in the art may find similar evaluation functions $R$ which reflect the above-mentioned principle.

According to the present invention, the surface geometry of the 3D model is represented by triangulation. Such triangulation is convenient for the calculations. Alternatively, other type of meshes with different geometry may be used.

The present invention also provides a computer-algorithm having computer-readable codes for causing a CAD module to carry out the method steps. The present invention also provides a computer-readable storage which stores the computer algorithm. The computer-algorithm preferably includes a neural network adapted to recognize the features of the 3D model, wherein one or more steps of the method are further based on the recognized features. For instance, the neural network can be trained with real or simulated 3D models to recognize the surface segments which are sensitive against post-processing. However, one or more steps of the method may be optionally performed manually by a user. For instance, the assigning step is preferably performed manually by a user through marking, on a display of the 3D model, one or more surface segments respectively with the desired weighing factors $f$. Alternatively, the assigning step may also be automatically performed by the computer algorithm based on the features recognized though the neural network.

**BRIEF DESCRIPTION OF THE DRAWINGS**

In the subsequent description, further aspects and advantageous effects of the present invention will be described in more detail by using exemplary embodiments and by referring to the drawings, wherein

Fig. 1 - is a schematic vertical cross-sectional view of a hemisphere as a 3D model according to an embodiment, wherein the curved surface indicated with the bold section has been assigned a weighing factor $f > 1$ which is considered as being sensitive against post-processing;

Fig. 2 - is a schematic vertical cross-sectional view of a hemisphere as a 3D model according to an alternative embodiment wherein the flat surface indicated with the bold section has been assigned a weighing factor $f > 1$ which is considered as being sensitive against post-processing.

The reference numbers shown in the drawings denote the elements as listed below and will be referred to in the subsequent description of the exemplary embodiments:

1. 3D model

$i$: Integer
$s$: Surface segment
$s_i$: $i^{th}$ surface segment
$f$: Weighing factor,
$f_i$: Weighing factor of the $i^{th}$ surface segment
$A_i$: Surface area of the $i^{th}$ surface segment
$R(\theta, \varphi)$: Evaluation function
$\theta$: Polar angle
$\varphi$: Azimuth angle
$\vec{n}_i(\theta, \varphi)$: Normal vector of the $i^{th}$ surface segment
$\vec{e}_z$: Unit vector in the vertical direction

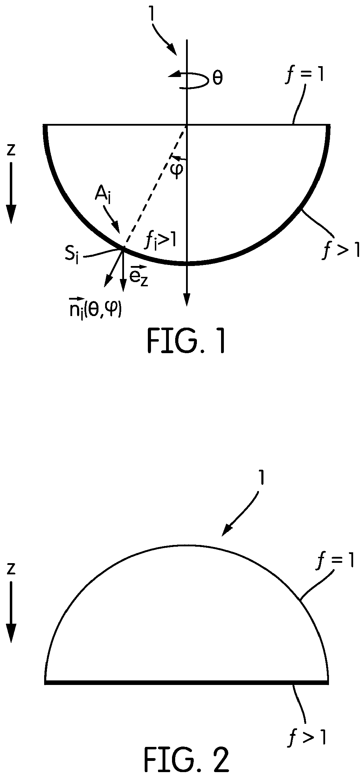

Fig. 1 is a schematic vertical cross-sectional view of a hemisphere as a 3D model (1) whose orientation has been determined by the method according to an embodiment of the present invention.

In a defining step of the method, the surface geometry of the 3D model (1) is initially defined. The surface geometry includes a plurality of surface segments $s_i$, where $i$ is an integer. The surface geometry of the 3D model (1) is preferably represented by triangulation, where the $i^{th}$ surface segment is a triangle (not shown) with the surface area $A_i$. In a further defining step an evaluation function $R$ is defined. The evaluation function $R$ depends on the surface segments and associated weighing factors $f$ which indicate a degree of sensitivity of the surface segments respectively against post-processing for removal of any support structure. In this embodiment the evaluation function is

$$R(\theta, \varphi) = - \frac{\sum_i f_i A_i \vec{n}_i(\theta, \varphi) \cdot \vec{e}_z}{\sum_i A_i}$$

wherein $i$ denotes an integer, $A_i$ denotes the surface area of the $i^{th}$ surface segment $s_i$, $f_i$ denotes a weighing factor associated with the $i^{th}$ surface segment, $\vec{n}_i(\theta, \varphi)$ denotes the normal vector of the $i^{th}$ surface segment, $\vec{e}_z$ denotes the unit vector in the vertical direction perpendicular to the platform and pointing in the building direction, $\theta$ and $\varphi$ denote the polar and the azimuth angles respectively, "·" denotes the scalar product, and the summations denoted with $\sum$ extend over all surface segments. In an assigning step, one or more weighing factors $f$ are assigned to the surface segments respectively.

A shown in Fig. 1, the entire curved surface indicated with the bold section has been assigned a weighing factor $f > 1$ which is considered as being sensitive against post-processing. The flat surface has been assigned a weighing factor $f = 1$. In a determining step, the orientation of the 3D model (1) is determined relative to the platform based on the evaluation function $R$ with the assigned weighing factors $f$. In Fig. 1 the hemisphere i.e., the 3D model (1) is oriented in the optimized direction for which $R$ is minimum. The 3D model (1) can be generated by an additive manufacturing apparatus (not shown). The additive manufacturing apparatus has a vat for holding a photocurable material, and a platform for holding the 3D object corresponding to the 3D model (1). The platform is relatively movable with respect to the vat. When generating the 3D model (1) with an additive manufacturing apparatus all support structure will be located on the flat surface, and thus the curved surface will be protected from mechanical post-processing.

Fig. 2 is a schematic vertical cross-sectional view of a hemisphere as a 3D model (1) according to an alternative embodiment. In this alternative embodiment, the curved surface indicated with the bold section has been assigned a weighing factor $f = 1$. The flat surface has been assigned a weighing factor $f > 1$ which is considered as being sensitive against post-processing. In Fig. 2, the hemisphere i.e., the 3D model (1) is oriented in the optimized direction for which $R$ is minimum. When generating the 3D model (1) with an additive manufacturing apparatus all support structure will be located on the curved surface, and thus the flat surface will be protected from mechanical post-processing.

The above two exemplary embodiments have been chosen to demonstrate the invention by using a relatively simple 3D model (1). Of course, the method can be easily applied to more complex geometries like dental restorations and the like.

The present invention also provides a computer-algorithm having computer-readable codes for causing a CAD module to carry out the above method steps. The CAD module is preferably connected or connectable to the additive manufacturing apparatus. Alternatively, the CAD module may be integral part of the additive manufacturing apparatus. The computer-algorithm is stored in a storage accessible by the CAD module. In a version of this embodiment, the computer-algorithm preferably includes a neural network adapted to recognize the features of the 3D model (1). The recognized features are used as an input for the method steps. However, the user may intervene the computer-algorithm and optionally perform one or more steps manually. For instance, the assigning step can be performed manually by a user through marking, on a display of the 3D model (1), one or more surface segments respectively with the desired weighing factors $f$. Alternatively, the assigning step may also be automatically performed by the computer algorithm based on the features recognized though the neural network. The neural network can be trained with 3D models (1) such as dental restorations and the like.

**Claims**

1. A method of determining the orientation of a 3D Model (1) to be generated by an additive manufacturing apparatus comprising: a vat for holding photocurable material; and a platform for holding the 3D object corresponding to the 3D model (1), wherein the platform is relatively movable with respect to the vat, the method comprising:

    a step of defining the surface geometry of the 3D model (1), wherein the surface geometry includes a plurality of surface segments;
    **characterized by** further comprising:

    a step of defining an evaluation function $R$ which depends on the surface segments and associated weighing factors $f$ which indicate a degree of sensitivity of the surface segments respectively against post-processing for removal of any support structure;
    a step of assigning one or more weighing factors $f$ to the surface segments respectively; and
    a step of determining the orientation of the 3D model (1) relative to the platform based on the evaluation function $R$ with the assigned weighing factors $f$.

2. The method according to claim 1, **characterized in**

**that** in the determination step the evaluation function is further optimized to determine the orientation of the 3D model (1).

3. The method according to claim 2, **characterized in that** the evaluation function R is based on the equation

$$R(\theta, \varphi) = -\frac{\sum_i f_i A_i \vec{n}_i(\theta, \varphi) \cdot \vec{e}_z}{\sum_i A_i}$$

wherein $i$ denotes an integer, $A_i$ denotes the surface area of the $i^{th}$ surface segment $s_i$, $f_i$ denotes a weighing factor associated with the $i^{th}$ surface segment, $\vec{n}_i$ $(\theta, \varphi)$ denotes the normal vector of the $i^{th}$ surface segment, $\vec{e}_z$ denotes the unit vector in the vertical direction perpendicular to the platform and pointing in the building direction, $\theta$ and $\varphi$ denote the polar and the azimuth angles respectively, "·" denotes the scalar product, and the summations denoted with $\sum$ extend over all surface segments.

4. The method according to any one of claims 1 to 3, **characterized in that** the weighing factor $f_i$ is larger than 1 for surface segments which are considered as being sensitive against post-processing for removal of any support structure, and for all other surface segments $f_i$ is equal to 1.

5. The method according to any one of claims 1 to 4, **characterized in that** the surface geometry of the 3D model (1) is represented by triangulation, where the $i^{th}$ surface segment is a triangle with the surface area $A_i$.

6. The method according to any one of claims 1 to 5, **characterized in that** the steps are performed through a computer algorithm which comprises a neural network adapted to recognize the features of the 3D Model (1), wherein the defining steps, the assigning step, and the determining step are further based on the recognized features.

7. The method according to any one of claims 1 to 6, **characterized in that** the assigning step can be performed manually by a user through marking, on a display of the 3D model (1), one or more surface segments respectively with weighing factors $f$.

8. A computer-program comprising computer-readable codes for causing a CAD module to carry out the method steps defined in any one of claims 1 to 7.

9. A computer-readable storage which stores the computer-program according to claim 8.

FIG. 1

FIG. 2

Europäisches
Patentamt

European
Patent Office

Office européen
des brevets

## EUROPEAN SEARCH REPORT

Application Number

EP 19 19 2934

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALEXANDER P ET AL: "Part orientation and build cost determination in layered manufacturing", COMPUTER AIDED DESIGN, ELSEVIER PUBLISHERS BV., BARKING, GB, vol. 30, no. 5, 1 April 1998 (1998-04-01), pages 343-356, XP004120895, ISSN: 0010-4485, DOI: 10.1016/S0010-4485(97)00083-3 * abstract * * page 343 - page 344, column 1, paragraph 1 * * page 345, column 1, paragraph 2 - page 349, column 1, paragraph 2 * * page 350, column 1, paragraph 7 - page 352, column 1, paragraph 2 * * page 352, column 2 * | 1-9 | INV. G06F30/20 G06F30/27 ADD. G06F113/10 G06F119/18 |
| Y | EP 2 922 029 A2 (PALO ALTO RES CT INC [US]) 23 September 2015 (2015-09-23) * abstract * * paragraph [0001] - paragraph [0008] * * paragraph [0018] - paragraph [0019] * * paragraph [0027] - paragraph [0031] * * paragraph [0046] * | 1-9 | |
| A | US 2016/250810 A1 (LYNCH AUGUST JACOB DAVID [US] ET AL) 1 September 2016 (2016-09-01) * abstract * * paragraph [0029] * * paragraph [0034] - paragraph [0040] * * paragraph [0045] - paragraph [0058] * * paragraph [0065] - paragraph [0069] * * paragraph [0078] * * paragraph [0093] * * claim 8 * | 1-9 | TECHNICAL FIELDS SEARCHED (IPC) G06F |

-/--

The present search report has been drawn up for all claims

| Place of search | Date of completion of the search | Examiner |
|---|---|---|
| Munich | 14 February 2020 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 19 2934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATOS MARINA A ET AL: "A Multi-objective Approach to Solve the Build Orientation Problem in Additive Manufacturing", 29 June 2019 (2019-06-29), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 261 - 276, XP047519853, ISBN: 978-3-319-10403-4 [retrieved on 2019-06-29] * abstract * * page 263, paragraph 3 - paragraph 264 * ----- | 1-9 | |

TECHNICAL FIELDS
SEARCHED       (IPC)

The present search report has been drawn up for all claims

| Place of search | Date of completion of the search | Examiner |
|---|---|---|
| Munich | 14 February 2020 | Radev, Boyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 2934

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2020

| Patent document cited in search report | | Publication date | Patent family member(s) | | Publication date |
|---|---|---|---|---|---|
| EP 2922029 | A2 | 23-09-2015 | EP 2922029 A2<br>SG 10201501738Y A<br>SG 10201808077Y A<br>US 2015269289 A1 | | 23-09-2015<br>29-10-2015<br>30-10-2018<br>24-09-2015 |
| US 2016250810 | A1 | 01-09-2016 | CN 107430592 A<br>EP 3262540 A1<br>US 2016250810 A1<br>WO 2016138344 A1 | | 01-12-2017<br>03-01-2018<br>01-09-2016<br>01-09-2016 |

EPO FORM P0459

For more details about this annex : see Official Journal of the European Patent Office, No. 12/82

**EP 3 783 520 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150151492 A1